# EUROPEAN PATENT APPLICATION

(11) **EP 1 830 260 A2**
(43) Date of publication of application: **05.09.2007**
(21) Application number: 06256336.6
(22) Date of filing: 13.12.2006
(51) Int. Cl.: G06F 9/46

(54) **Mounting device, electronic device, method of controlling mounting device, controlling program, and recording medium**

(30) Priority: 14.12.2005 JP 2005359857
(71) Applicant: SEIKO EPSON CORPORATION, Shinjuku-ku, Tokyo 163-0811 (JP)
(72) Inventor: Shinya Taniguchi c/o Seiko Epson Corporation, Nagano 392-8502 (JP); Fukao, Akihito c/o Seiko Epson Corporation, Nagano 392-8502 (JP)
(74) Representative: Sturt, Clifford Mark

(57) **Abstract**

A mounting device is provided which includes a connection unit to which a plurality of peripheral devices are connected as assembly material; a program memory unit that contains a plurality of application programs that use peripheral devices connected to the connection unit; an application execution unit that executes the application programs; and an access right setting unit that sets peripheral devices whose use is allowed among peripheral devices connected to the connection unit in each of the application programs, in which the access right setting unit sets the use permission of one peripheral device to only one application program.

## Description

### BACKGROUND

### 1. Technical Field

The present invention relates to a technology that prevents the situation where a plurality of application programs installed on a mounting device simultaneously access to one peripheral device detachably connected to the mounting device.

### 2. Related Art

Recently, in personal computers, a joining connector according to a predetermined standard (e.g., USB standard or IEEE1394 standard) is installed, and various peripheral devices such as input devices (e.g., a keyboard or a mouse) or removable drive devices (e.g., a CD/DVD drive) are connected. In such a configuration, because there are cases where the same peripheral devices are used from at least two application programs (hereinafter, simply called an "application") installed in the personal computer, there is a need for hardware resources management that examines which application uses the peripheral device. In the personal computer, the hardware resources management is simply performed using a user interface (also called "UI"). Specifically, in the case where two applications use input devices such as a keyboard, as the application positioned at the most front side in the user interface (i.e., in active state) occupies the use of peripheral devices, basically, in the user interface the application being used (or selected) by the user is controlled to be used prior to other applications.

Meanwhile, recently, a mounting-type computer is built in digital home appliances such as a digital camera or a printer, or communication devices such as a facsimile or a mobile phone (hereinafter, called a "mounting device"). Among such mounting devices, if devices without UI use peripheral devices, such a management using the UI is not possible. Hence, a technology that a platform manages resources or controls execution by interposing the platform built by software between a plurality of applications and hardware resources such as memory (for example, see JP-A-2002-82806).

However, such a technology only manages hardware resources that have been already installed in the mounting device, and thus the management of resources such as dynamically changing peripheral devices in the configuration is not possible, which is a problem.

### SUMMARY

An advantage of some aspects of the invention is to provide a mounting device, an electronic device, a method of controlling the mounting device, a control program, and a recording medium, in which the situation where a plurality of application programs use the same peripheral device at the same time can be prevented.

According to an aspect of the invention, there is provided a mounting device including a connection unit to which a plurality of peripheral devices are detachably connected, a program memory unit that contains a plurality of application programs that use peripheral devices connected to the connection unit, an application execution unit that executes the application programs; and an access right setting unit that sets peripheral devices whose use is allowed among peripheral devices connected to the connection unit in each of the application programs, in which the access right setting unit sets the use permission of one peripheral device to only one application program.

According to the aspect, since the peripheral devices whose use is allowed is set in each of the application program and the use permission of one peripheral device is set only to one application program, the use permission is not given to more than two application programs for the same peripheral device, and thus the situation where the same peripheral device is used (accessed) by a plurality of application programs is prevented.

Here, it is preferable that the plurality of peripheral devices connected to the connection unit includes an access-permission group memory unit that remembers access-permission groups constituted by one or a plurality of groups, and the access right setting unit allocates a different access-permission group to each application program, whereby the use permission of one peripheral device is set to only one application program.

According to this configuration, because the access permission for a plurality of peripheral devices can be granted to one application program by arranging a plurality of peripheral devices by access-permission groups, the grant of the access permission for a plurality of peripheral devices to an application program becomes simple.

In the aspect of the invention, it is preferable that the connection unit includes a plurality of joining connectors connected to the peripheral devices, and the access-permission group is set in the joining connector unit.

According to this configuration, because the access-permission group is set in the joining connector unit, a user that uses an application program can simply recognize peripheral devices that belong to one access-permission group, and identify each access-permission group. Further, in the case where a collector (a hub) is connected to the joining connector as a peripheral device, and a plurality of peripheral devices are connected to this collector, it is preferable that the collector and the plurality of peripheral devices connected to the collector are connected to the same connector.

Further, it is preferable that each of the application programs includes a peripheral device information obtaining unit that obtains information of peripheral devices whose use has been permitted for the application program.

According to this configuration, the application program can obtain information of all available peripheral devices. Further, even in the case where multiple peripheral devices are connected, because the application program does not obtain information of unavailable peripheral devices, wrong operation can be prevented.

Further, it is preferable that a plurality of containment locations that separately contain each of the application programs are installed in the program memory unit in advance, and the access right setting unit sets peripheral devices whose use permission is given to the application program on the basis of the containment location where the application program is contained.

According to this configuration, because the use permission of peripheral devices is set according to the containing location of the application program, the allocation of peripheral devices whose use is permitted can be simply changed by changing the containing location even for the same application program.

Further, it is preferable that the mounting device according to the aspect of the invention includes an install control unit that prohibits the installation of an application program that can use peripheral devices whose use is permitted for the application program that has been already contained in the program memory unit.

According to this configuration, because the installation of a plurality of application programs which can use the same peripheral device is clearly prevented, even in the environment where a plurality of application programs are executed, the same peripheral device is not used at the same time, thereby executing the application programs safely.

Further, it is preferable that the mounting device according to the aspect of the invention includes an install control unit that prohibits the execution of the application program contained in the program memory unit in the case where the application program that can use peripheral devices whose use has been permitted for the application program contained in the program memory unit.

According to this configuration, because the simultaneous execution of a plurality of application programs which can use the same peripheral device is clearly prevented, even in the environment where a plurality of application programs are executed, the same peripheral device is not used at the same time, thereby executing the application programs safely.

Further, in this configuration, in the case where the application program that can use peripheral devices whose use has been permitted for the application program already contained in the program memory unit is installed, the install control unit can uninstall the application program already contained in the program memory unit.

According to this configuration, the installation of a plurality of application programs that can use the same peripheral device is clearly prevented.

Further, it is possible that the mounting device according to the aspect of the invention is built in an electronic device.

According to another aspect of the invention, there is provided a method of controlling a mounting device including a connection unit to which a plurality of peripheral devices are detachably connected, a program memory unit that contains a plurality of application programs that use peripheral devices connected to the connection unit, and an application execution unit that executes the application program, the method including setting peripheral devices whose use is permitted among peripheral devices connected to the connection unit to each of the application programs, and setting the use permission of one peripheral device to only one application program.

According to another aspect of the invention, there is provided a control program that makes a mounting device function as an access right setting unit that sets peripheral devices whose use is permitted among peripheral devices connected to the connection unit, and sets the use permission of one peripheral device to only one application program, in which the mounting device includes a connection unit to which a plurality of peripheral devices are connected as assembly material, a program memory unit that contains a plurality of application programs that use peripheral devices connected to the connection unit, and an application execution unit that executes the application programs.

According to a still another aspect of the invention, there is provided a computer-readable recording medium that records a control program that makes a mounting device function as an access right setting unit that sets peripheral devices whose use is permitted among peripheral devices connected to the connection unit, and sets the use permission of one peripheral device to only one application program, in which the mounting device includes a connection unit to which a plurality of peripheral devices are connected as assembly material, a program memory unit that contains a plurality of application programs that use peripheral devices connected to the connection unit, and an application execution unit that executes the application programs.

In the method of controlling a mounting device, the control program, and the recording medium, as in the mounting device according to the aspect of the invention, since peripheral devices whose use is permitted are set per application program, and the use permission for one peripheral device is set to only one application program, the use permission is not granted to two or more application programs for the same peripheral device, and thus it is prevented that a plurality of application programs use (access) the same peripheral device at the same time.

### BRIEF DESCRIPTION OF THE DRAWINGS

The invention will be described by way of example only with reference to the accompanying drawings, wherein like numbers reference like elements.

Fig. 1 illustrates a network printer according to an embodiment of the invention.

Fig. 2 is a block diagram illustrating the functional structure of a control unit.

Fig. 3 illustrates an example of a connection state table.

Fig. 4 schematically illustrates an example of an access right setting table.

Fig. 5 schematically illustrates an example of an access right management table.

Fig. 6 illustrates another example of the access right management table.

Fig. 7 is a flowchart illustrating the grant of access rights.

Fig. 8 is a flowchart illustrating the management of access rights.

Fig. 9 is a flowchart illustrating the control of installations.

### DESCRIPTION OF EXEMPLARY EMBODIMENTS

Hereinafter, preferred embodiments of the invention will be described with reference to the accompanying drawings.

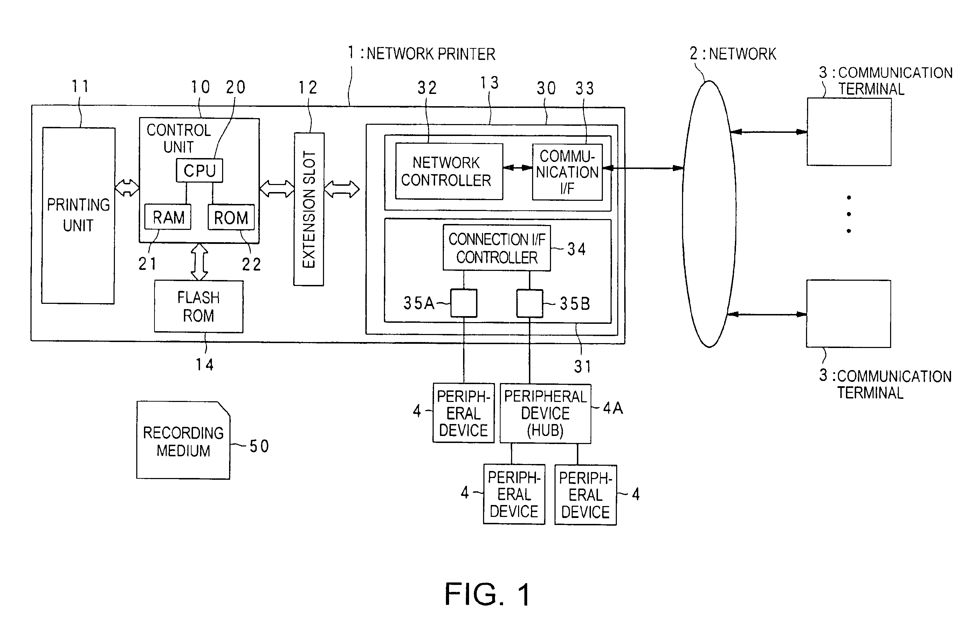

Fig. 1 illustrates an outline of a network printer (hereinafter, simply called a "printer") 1 according to an embodiment of the invention. As illustrated in Fig. 1, the printer 1 includes a control unit 10, a printing unit 11, an extension slot 12, and a network card 13, and a flash ROM 14.

The control unit 10 dominantly controls each part of the printer 1, and includes a CPU 20 as an operation processor, a ROM 21 where a control program (called "firmware") executed by the CPU 20 is contained, a RAM 22 working as a work area of CPU 20 where the result of operation or various data is temporarily contained.

The printing unit 11 executes printing on a recording sheet by the control of the control unit 10, and includes a sheet-feeder (not shown), and a printing mechanism equipped in a usual printer such as a printing head. The extension slot 12 is installed in the printer 1. The extension slot 12 is a socket where a card-type circuit for the extension of the function of the printer 1 is inserted to and removed from, and the network card 13 is inserted to the extension slot 12.

The network card 13 includes a data communication unit 30, and a peripheral device connection unit 31. The network card 13 communicates with other communication terminals (e.g., a personal computer) through the network 2 such as a LAN installed in a building, and connects peripheral devices. That is, the data communication unit 30 includes a network controller 32 that handles signals based on predetermined communication protocols such as TCP/IP, a communication interface 33 connected to the network 2 by a cable or wirelessly. Further, the peripheral device connection unit 31 connects peripheral devices such as a keyboard, a mouse, and a card reader. For example, the peripheral device connection unit 31 includes a connection I/F controller 34 that handles signals according to predetermined standards such as USB standards or IEEE 1394 standards, a plurality of joining connectors 35A and 35B, which are the connectors (two in the illustrated example) of the peripheral device 4.

The connection I/F controller 34 has the host function that manages peripheral devices 4 by obtaining the information of peripheral devices 4 (hereinafter, called "device information") connected to the joining connectors 35A and 35B.

Further, as illustrated in Fig. 1, by connecting a hub (a collector) 4A to the joining connectors 35A and 35B as a peripheral device 4, a plurality of peripheral devices 4 can be connected to one joining connector 35A and 35B through the hub 4A in a tree form. Further, a daisy chain connection is also possible, which binds peripheral devices 4 with a cable or others.

The flash ROM 14 is a rewritable non-volatile memory, and contains various applications. Such applications are recorded on a recording medium 50 such as a memory card, and are distributed, or are distributed through an electric communication line such as the network 2, whereby the distributed applications are constituted to make the installation possible in the flash ROM 14. Further, as in the application, the control program contained in the ROM 21 of the control unit 10 can be distributed through the electric communication line such as the recording medium 50 or the network 2, whereby the distributed control program can be installed in ROM 21.

Next, the functional configuration of the printer 1, especially the functional configuration of the control unit 10, will be described in the following.

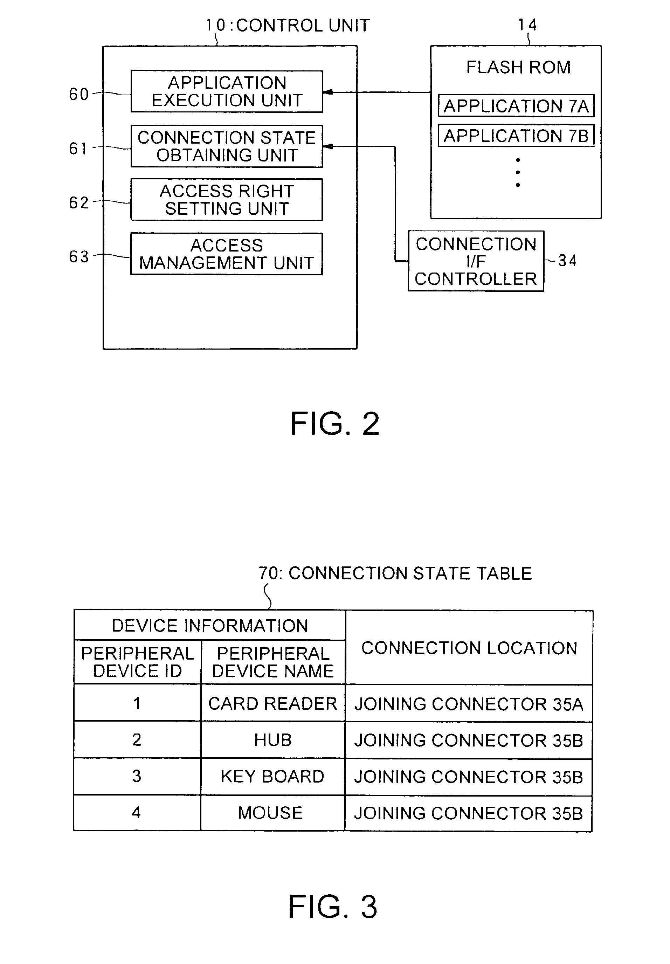

Fig. 2 is a block diagram illustrating the functional configuration of the control 10. As illustrated in Fig. 2, the control unit 10 is constituted to function as an application execution unit 60, a connection state obtaining unit 61, an access right-grant unit 62, and an access management unit 63 by executing the control program.

The application execution unit 60 executes each application 7A, 7B, ... (hereinafter, called "application 7" exempting the situation where it needs to be distinguished) contained in the flash ROM 14. Further, it is assumed that each application 7 uses peripheral devices 4.

The connection state obtaining unit 61 obtains identification information of peripheral devices 4 connected to the joining connectors 35A and 35B from the connection I/F controller 34, and generates the connection state table 70 illustrated in Fig. 3, which indicates the corresponding relation between the identification information of peripheral devices 4 and the joining connectors 35A and 35B, in RAM 22. Here, in the case where a plurality of peripheral devices 4 are connected to the joining connectors 35A and 35B through a hub 4A, the hub 4A and each peripheral device 4 connected to the hub 4A are connected to the same joining connectors 35A and 35B, which is recorded in the connection state table 70.

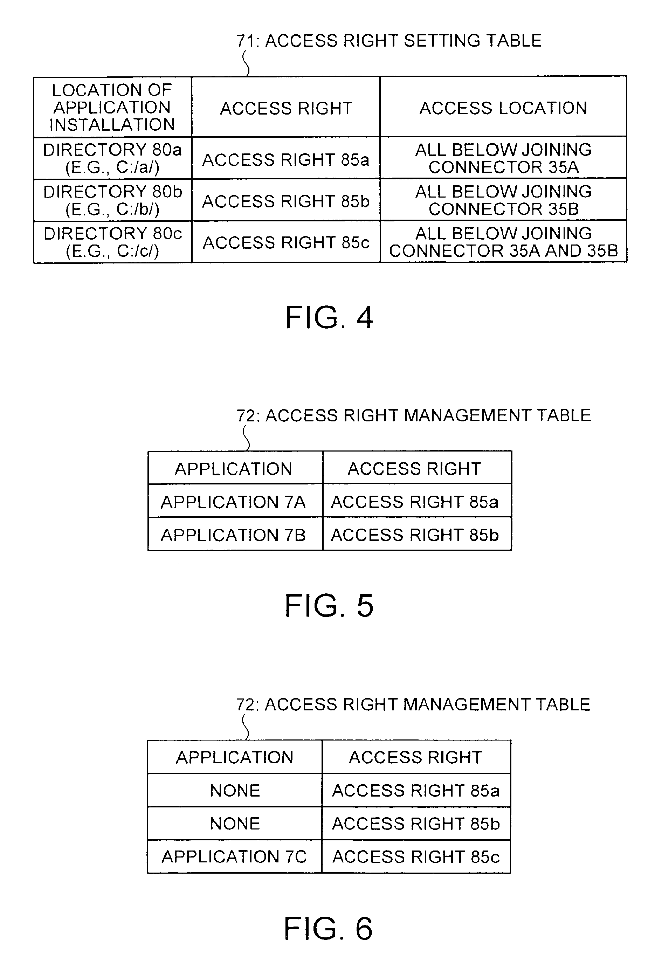

The access right setting unit 62 sets the access right on peripheral devices 4 for the application 7 contained in the flash ROM 14, and according to the embodiment, as illustrated in Fig. 4, a different access right is set for each install location (directory) of the application 7. Specifically, a plurality (three in the illustrated example) of directories 80a to 80c are specified in advance as locations for installing the application 7 in the flash ROM 14, and different access rights 85a to 85c corresponding to each directory 80a to 80c are set.

In other words, the access right 85a that allows the access (use) to only the peripheral devices 4 connected to the joining connector 35A is set in the directory 80a, and the access right 85b that allows the access (use) to only the peripheral devices 4 connected to the joining connector 35B is set in the directory 80b. Further, the access right 85c that allows the access (use) to the peripheral devices 4 connected each of the joining connectors 35A and 35B is set in the directory 80c. The access rights 80a and 80b and the access right 85c are exclusively used.

Likewise, the peripheral devices 4 connected to the printer 1 are divided in the joining connectors 35A and 35B units, and the access right 85 is granted for each division. That is, one peripheral device 4 belongs to one access right 85 only, and by granting a different access right 85 for each application 7, one peripheral device 4 is allowed to be accessed (used) to only one application.

The above-mentioned installation location of the application, the access right corresponding to the location, and the corresponding relation between peripheral devices whose access right is allowed are contained in advance in the ROM 21 as an access right setting table 71.

Further, in the case where the application 7 is newly installed in the printer 1, the access right setting unit 62 generates an access right management table 72 that indicates the corresponding relation between the application 7 and the access rights so that the access rights corresponding to the installation location of the application 7 are granted based on the access right setting table 71, as illustrated in Fig. 5, and contains the access right management table 72 in the RAM 22 or the flash ROM 14.

In the case where the application 7 accesses peripheral devices 4, the access management unit 63 allows the access of only peripheral devices 4 that can be accessed by the application 7, based on the access right management table 72.

Here, in the embodiment, because the access permission to peripheral devices 4 connected to each of joining connectors 35A and 35B, that is, to all peripheral devices 4 connected to the printer 1, has been set in the access right 85c, in the case where the access right 85c is granted to the application 7 (i.e., in the case where the application 7 is installed in the directory 80c), as illustrated in Fig. 6, another application 7 is uninstalled from the printer 1 so that the simultaneous access to the same peripheral device 4 is prohibited, which will be described in detail later.

Next, the operation of the embodiment is described in the following.

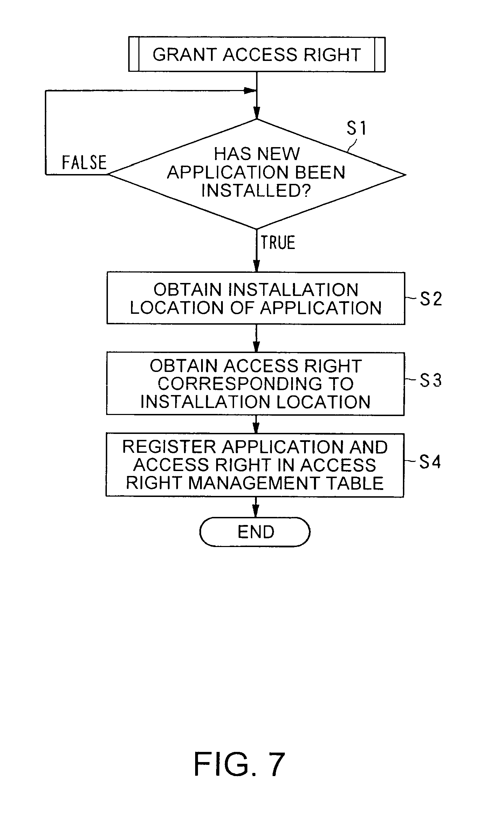

Fig. 7 is a flowchart illustrating the access right grant that grants the access right to the application 7. As illustrated in Fig. 7, the access right setting unit 62 monitors the installation on the printer 1 of a new application, and in the case where an application 7 is newly installed (Step S1: TRUE), obtains the directory 80 (the installation location) where the application 7 is installed (Step S2). Then, the access right setting unit 62 obtains the access right 85 corresponding to the installed directory 80 based on the access right setting table 71 (Step S3), and makes the obtained access right 85 correspond to the application 7, then registers in the access right management table 72.

Because the access right 85 corresponding to the installation location is set for the application 7, available peripheral devices 4 are divided so that they are not overlapped in the application 7.

Next, the operation when the installed application uses (accesses) peripheral devices 4 is described in the following.

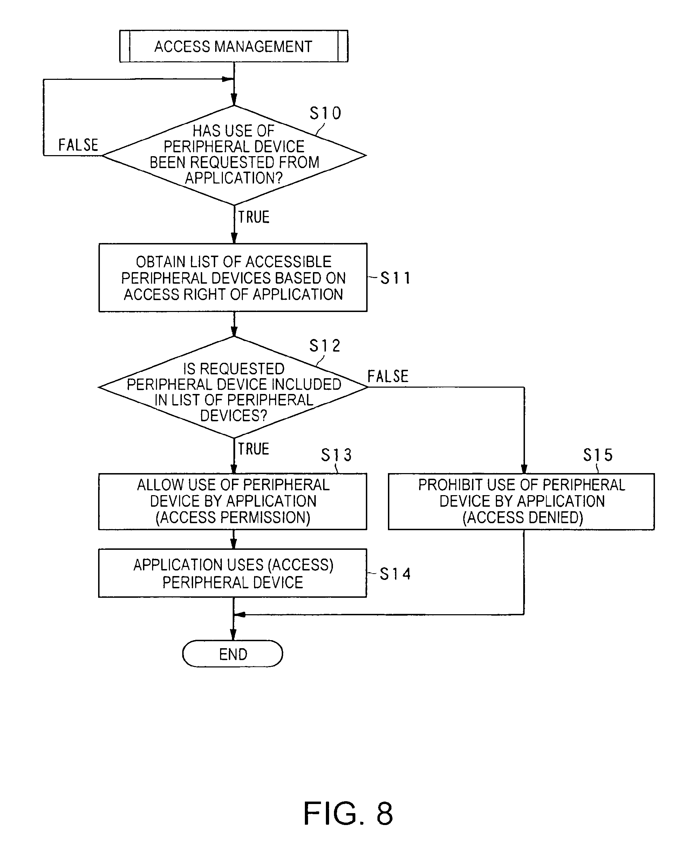

Fig. 8 is a flowchart illustrating the access management. This access management is handled by the access management unit 63 in the case when the application 7 accesses to peripheral devices 4. Specifically, when the application 7 uses peripheral devices 4, the use request of the peripheral devices 4 is outputted from the application 7 (Step S10: TRUE), and the access management unit 63 executes the following process in order to determine whether the application 7 can use the peripheral devices 4.

That is, the access management unit 63 specifies the access right 85 of the application 7 based on the access management table 72, and obtains the list of peripheral devices 4 that can be accessed by the application 7 from the connection state table 70 based on the access right 85 (Step S11). Likewise, by constituting the list of peripheral devices 4 that can be accessed by the application 7, even in the case where the multiple peripheral devices 4 are connected to the printer 1, it can be simply identified in the application 7 side whether the desirable peripheral device 4 is available because devices that can be available within the range of the access right.

Next, the access management unit 63 determines whether the requested peripheral devices 4 are included in the list of accessible peripheral devices 4 (Step S12), and in the case where the requested peripheral devices 4 are included (Step S12: TRUE), the access management unit 63 allows the use (access) of the requested peripheral devices 4 to the application 7 (Step S13). As a result, the application 7 realizes various services using peripheral devices 4 (Step S14).

Further, as a result of the determination of step S12, in the case where the requested peripheral devices 4 are not included in the list of the accessible peripheral devices 4 (Step S12: FALSE), the access management unit 63 prohibits the use (access) of the peripheral devices 4 to the application 7 (Step S15).

Hence, because each application 7 can use only peripheral devices 4 according to the access right 85, and the use of peripheral devices 4 beyond the range of the access right 85 is prohibited, each application 7 can use peripheral devices 4 within the range of the access right 85 without being affected by other applications 7.

Here, in the case where an application 7 is newly installed in the printer 1, the peripheral devices 4 used by the application 7 and the peripheral devices 4 used by the application 7 whose installation has been completed may be overlapped. Hence, in the embodiment, when an application 7 is newly installed, by executing the install control described in the following, the overlapped installation of the applications 7 that use the same peripheral device 4 is prevented.

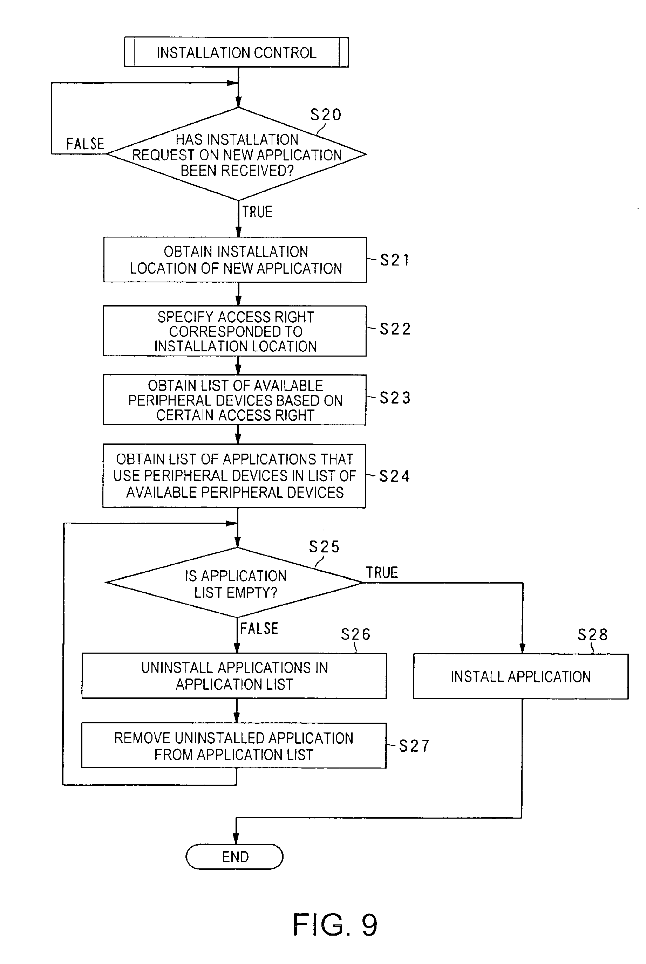

Fig. 9 is a flowchart illustrating the install control. As illustrated in Fig. 9, in the case-where there is an installation request from a new application 7 (Step S20: TRUE), the access right setting unit 62 obtains the location where the new application 7 is installed (Step S21), and specifies the access right 85 corresponding to the installation location based on the access right setting table 71 (Step S22). Then, the access right setting unit 62 obtains the list of peripheral devices 4 that can be used by the access right 85 based on the connection state table 70 (Step S23), and obtains the application list of extracted applications 7 that can use the peripheral devices 4 included in the list of peripheral devices 4 among applications 7 whose installation has been completed (Step S24).

The access right setting unit 62 determines whether the application list obtained in Step S24 is empty (Step S25), and if it is not empty (Step S25: FALSE), because the peripheral devices used by the applications 7 whose installation has been completed and the application to be newly installed are overlapped, in order to avoid such overlapping, the access right setting unit 62 uninstalls the applications 7 whose installation has been completed, i.e., the applications 7 included in the application list, and deletes the applications 7 uninstalled from the application list (Step S27). Further, in order to uninstall the applications 7 registered in the application list, the access right setting management unit 62 returns the handling order back to Step S25.

As a result of the determination of Step S25, in the case where the application list is empty (Step S25: TRUE), the peripheral devices 4 used by the applications 7 whose installation has been completed and the installation to be newly installed are not overlapped, the access right setting unit 62 installs a new application 7 (step S28).

By the above-mentioned process, in the case where a new application 7 is installed in the printer 1, if the peripheral devices 4 used by the newly-installed application and the applications 7 whose installation has been completed are overlapped, because the applications 7 whose installation has been completed are uninstalled, it is clearly prevented that a plurality of applications 7 that can use the same peripheral device 4 in the printer 1 are installed in the printer 1.

Further, before uninstalling the applications 7 whose installation has been completed, the purpose is informed to the user, and whether the applications 7 whose installation has been completed will be uninstalled, that is, whether a new application 7 will be installed, can be constituted to be selected by the user.

As described above, according to the embodiment, because the access right setting unit 62 sets the use permission of one peripheral device 4 to only one application 7 so that it is prevented that the same peripheral device 4 is allowed to be used by two or more applications 7, it can be clearly prevented that a plurality of applications 7 use the same peripheral device 4 at the same time. That is, the installed application 7 can certainly use the peripheral device 4 corresponding to the granted access right 85.

Further, according to the embodiment, by setting the access right 85 (access permission group) in joining connector 35A and 35B units, and allocating a different access right 85 for each application 7, the use permission of one peripheral device 4 is set to only one application 7. As such, the access right 85 to a plurality of peripheral devices 4 can be granted all together to one application 7.

Further, because the access right 85 is set in joining connector units 35A and 35B, the user that uses the application 7 can simply identify the peripheral device 4 that belongs to each access right 85.

According to the embodiment, because the information of peripheral devices 4 that can be used by the application 7 can be obtained by each application 7, the application 7 can obtain information only on peripheral devices that can be used by the application 7, even in the case where a multiple of peripheral devices 4 are connected, because the application 7 cannot obtain the information on unavailable peripheral devices 4 to the application 7, the wrong operation can be prevented.

Further, according to the embodiment, because a plurality of directories 80 (locations for containment) for individually containing each application 7 are set in advance, and the access right 85 is set according to the directories 80 of the application 7, the allocation of peripheral devices 4 whose use is permitted even for the same application 7 can be simply changed by changing the directory 80.

Further, according to the embodiment, in the case where an application 7 is newly installed in the printer 1, if the peripheral devices 4 used by the application 7 and the applications 7 whose installation has been completed are overlapped, the applications 7 whose installation has been completed are uninstalled, and thus it is surely prevented that a plurality of applications 7 that use the same peripheral device 4 in the printer 1 are installed in the printer 1.

Further, the above-described embodiment is merely exemplary, thus can be arbitrarily modified or applied within the range of the present invention.

For example, in the above-described embodiment, in the case where an application 7 is newly installed in the printer 1, if the peripheral devices 4 used by the application 7 and the applications 7 whose installation has been completed are overlapped, the applications 7 whose installation has been completed are uninstalled, but the present invention is not limited to this.

That is, it can be constituted to prohibit the installation of a new application 7, or to install a flag that indicates execution permission/prohibition of the application 7, and set the flag of the application 7 whose installation has been completed as the execution prohibition.

Further, for example, in the above-described embodiment, a printer 1 has been used as an example of a mounting device, but the present invention is not limited to the printer 1. The mounting device can be other electronic devices such as a facsimile or a projector.

Further, in the above-described embodiment, the configuration that the control unit 10 of the printer 1 functions as a mounting device is illustrated, but the present invention is not limited to this. For example, a connection I/F controller 34 of the network card 13 can function as a mounting device in the present invention, and grant the access right 85 to the application 7. In this case, it is preferable that a flash ROM 14 that contains the application 7 that uses peripheral devices is installed in the network card 13.

In such a configuration, only by inserting the network card 13 into the printer 1, the peripheral devices 4 can be managed without changing the control program of the printer 1, and various applications 7 can install. Especially, by applying the present invention to the device built in an electronic device such as a network card 13 as assembly material, the peripheral devices 4 can be certainly and simply managed without using the user interface.

The aforegoing description has been given by way of example only and it will be appreciated by a person skilled in the art that modifications can be made without departing from the scope of the present invention.

## Claims

1. A mounting device comprising:
a connection unit to which a plurality of peripheral devices are connected as assembly material;
a program memory unit that contains a plurality of application programs that use peripheral devices connected to the connection unit;
an application execution unit that executes the application programs; and
an access right setting unit that sets peripheral devices whose use is allowed among peripheral devices connected to the connection unit in each of the application programs,
wherein the access right setting unit sets the use permission of one peripheral device to only one application program.

2. The mounting device according to Claim 1,
wherein the plurality of peripheral devices connected to the connection unit includes an access-permission group memory unit that remembers access-permission groups constituted by one or a plurality of groups, and wherein the access right setting unit allocates a different access-permission group to each application program, and thus the use permission of one peripheral device is set to only one application program.

3. The mounting device according to Claim 2,
wherein the connection unit includes a plurality of joining connectors connected to the peripheral devices, and the access-permission group is set in the joining connector unit.

4. The mounting device according to Claim 1,
wherein each of the application programs includes a peripheral device information obtaining unit that obtains information of peripheral devices whose use has been permitted for the application program.

5. The mounting device according to Claim 1,
wherein a plurality of containment locations that separately contain each of the application programs are installed in the program memory unit in advance, and
wherein the access right setting unit sets peripheral devices whose use permission is given to the application program on the basis of the containment location where the application program is contained.

6. The mounting device according to Claim 1, further comprising an install control unit that prohibits the installation of an application program that can use peripheral devices whose use is permitted for the application program that has been already contained in the program memory unit.

7. The mounting device according to Claim 1, further comprising an install control unit that prohibits the execution of the application program contained in the program memory unit in the case where the application program that can use peripheral devices whose use has been permitted for the application program contained in the program memory unit is installed.

8. An electronic device that includes the mounting device according to Claim 1.

9. A method of controlling a mounting device including a connection unit that contains a plurality of peripheral devices as assembly material, a program memory unit that contains a plurality of application programs that use peripheral devices connected to the connection unit, and an application execution unit that executes the application program,
the method comprising:
setting peripheral devices whose use is permitted among peripheral devices connected to the connection unit to each of the application programs; and
setting the use permission of one peripheral device to only one application program.

10. A control program that makes a mounting device function as an access right setting unit that sets peripheral devices whose use is permitted among peripheral devices connected to the connection unit, and sets the use permission of one peripheral device to only one application program,
wherein the mounting device comprises a connection unit to which a plurality of peripheral devices are connected as assembly material; a program memory unit that contains a plurality of application programs that use peripheral devices connected to the connection unit; and an application execution unit that executes the application programs.

11. A computer-readable recording medium that records a control program that makes a mounting device function as an access right setting unit that sets peripheral devices whose use is permitted among peripheral devices connected to the connection unit, and sets the use permission of one peripheral device to only one application program,
wherein the mounting device comprises a connection unit to which a plurality of peripheral devices are connected as assembly material; a program memory unit that contains a plurality of application programs that use peripheral devices connected to the connection unit; and an application execution unit that executes the application programs.
